# EUROPÄISCHE PATENTSCHRIFT

(11) **EP 1 831 546 B1**
(45) Veröffentlichungstag und Bekanntmachung des Hinweises auf die Patenterteilung: **07.09.2011**
(21) Anmeldenummer: 05801558.7
(22) Anmeldetag: 02.11.2005
(51) Int. Cl.: F04B 1/04

(54) **ANTRIEBSVORRICHTUNG**
DRIVE DEVICE
DISPOSITIF D'ENTRAINEMENT

(30) Priorität: 22.12.2004 DE 102004061812
(43) Veröffentlichungstag der Anmeldung: 12.09.2007
(73) Patentinhaber: ROBERT BOSCH GMBH, 70442 Stuttgart (DE)
(72) Erfinder: ALAZE, Norbert, 71706 Markgroeningen (DE)
(86) Internationale Anmeldenummer: PCT/EP2005/055687
(87) Internationale Veröffentlichungsnummer: WO 2006/066995

(56) Entgegenhaltungen:
- DE-B3- 10 307 128
- US-A- 5 842 405
- US-B1- 6 641 232

## Beschreibung

### Stand der Technik

Die Erfindung betrifft eine Antriebsvorrichtung gemäß der im Oberbegriff des Patentanspruches 1 näher definierten Art.

Eine aus der DE 103 07 128 B3 nächster Stand der Technik bekannte Kolbenpumpe ist beispielsweise mit einer Exzentereinrichtung bzw. einem Exzenterantrieb ausgeführt, mittels welchen Rotationsbewegungen eines Elektromotors über eine an der Motorwelle angeordnete Exzentrizität in translatorische Bewegungen der Kolbenelemente der Kolbenpumpen umgesetzt werden. Dazu wird eine Exzentrizität in Form einer Ellipse eingesetzt. Zwischen der Exzentrizität und der dieser Exzentrizität zugewandten Stirnseite der Kolbenpumpe ist ein Wälzlager angeordnet, dessen Innenring in seinem Durchmesser der großen Achse des elliptischen Exzenter entspricht. Mittels dieser Anordnung lässt sich das Lagerspiel im obersten und untersten Totpunkt der Exzentrizität aufheben und eine verbesserte Förderleistung der Kolbenpumpe erhalten, weil das Lagerspiel keinen Einfluss mehr auf den Gesamthub des Kolbenelements hat.

Im Gegensatz dazu ermöglichen es allgemein bekannte nockenförmige Exzentrizitäten eine Druckpulsation einer Kolbenpumpe über den Betriebszyklus der Kolbenpumpe ohne zusätzliche Kolbenelemente zu vergleichmäßigen. Der Einsatz nockenförmiger Exzentrizitäten bietet die Möglichkeit, den Anteil der Förderphase einer Kolbenpumpe an einem Betriebszyklus einer Kolbenpumpe in Bezug auf eine Ansaugphase zu vergrößern. Bei unverändertem Hubvolumen der Kolbenpumpe bedeutet das, dass das gleiche Hubvolumen einer Kolbenpumpe während einer nunmehr längeren Förderphase mit einer geringeren Drucküberhöhung zur Förderseite der Kolbenpumpe gepumpt wird.

Nachteilig dabei ist jedoch, dass im Anlagebereich zwischen einem Kolbenelement einer Kolbenpumpe und einer nockenförmigen Exzentrizität hohe Gleitreibungskräfte auftreten, was unerwünscht hohe Verlustleistungen zur Folge hat, weshalb derartige Kolbenpumpen jeweils durch eine geringe Lebensdauer gekennzeichnet sind. Konventionelle Wälz- oder Gleitlager sind ringförmig ausgestaltet und lassen sich deshalb zur Reibungsminderung bei nockenförmigen Exzentrizitäten nicht einsetzen.

Allgemein bekannt sind darüber hinaus ferner kreisförmige Exzentrizitäten als Antriebe für Kolbenpumpen. Bei kreisförmigen Exzentrizitäten entspricht die translatorische Bewegung eines Kolbenelements einer Kolbenpumpe einer Sinusbewegung, deren Nulldurchgänge jeweils nach einem Drehwinkel der Motorwelle von 180° zyklisch auftreten. Generell umfasst ein Betriebszyklus einer Kolbenpumpe damit eine Ansaugphase und eine sich daran anschließende Förderphase der Kolbenpumpe, die über einem Drehwinkel der Motorwelle von 360° zyklisch nacheinander auftreten und jeweils innerhalb eines halben Betriebszyklus ablaufen. Kolbenpumpen mit kreisförmigen Exzentrizitäten haben jedoch Nachteile hinsichtlich von im Betriebszyklus auftretenden Druckpulsationen.

### Vorteile der Erfindung

Die erfindungsgemäße Antriebsvorrichtung, die insbesondere zum Antreiben einer mit wenigstens einem Kolbenelement ausgebildeten Kolbenpumpe eines Bremssystems eines Fahrzeugs einsetzbar ist und mittels der das Kolbenelement über eine Exzentereinrichtung zwischen einem oberen Totpunkt und einem unteren Totpunkt in Längsrichtung in einem Gehäuse verfahrbar ist, ist im Bereich ihrer Exzentereinrichtung mit wenigstens einem nockenförmigen Exzenterelement ausgebildet, dessen äußere Mantelfläche eine Steuerkurve für die Steuerung der Bewegung des Kolbenelements darstellt. Zwischen der Steuerkurve des Exzenterelements und dem Kolbenelement ist eine Wälzlagereinrichtung vorgesehen, die mit einer derartigen Elastizität ausgeführt ist, dass das Kolbenelement gemäß der vordefinierten Kontur der Steuerkurve des Exzenterelements ansteuerbar ist, siehe Anspruch 1.

Dadurch wird die Reibung im Bereich zwischen einem Kolbenelement einer Kolbenpumpe und einem nockenförmigen Exzenterelement im Vergleich zu herkömmlichen Antrieben von Kolbenpumpen wesentlich reduziert, da anstatt einer Gleitlagerung, die durch hohe Reibkoeffizienten gekennzeichnet ist, eine Wälzlagerung vorgesehen ist, die wesentlich geringere Reibkennwerte verursacht.

Die erfindungsgemäße Antriebsvorrichtung vereint somit die Vorteile einer Nockensteuerung, bei der der Förderwinkel einer Kolbenpumpe zur Vergleichmäßigung der Druckpulsation größer als 180° darstellbar ist, mit einer geringen Reibbelastung der Bauteile im Anlagebereich zwischen einer nockenförmigen Exzentrizität einer Exzentereinrichtung und der Stirnseite eines Kolbenelement einer Kolbenpumpe.

Das bedeutet, dass der Förderstrom bzw. die Druckpulsation einer Kolbenpumpe über den gesamten Betriebszyklus betrachtet aufgrund des Einsatzes einer erfindungsgemäß ausgebildeten Antriebseinrichtung einen geringen Ungleichförmigkeitsgrad aufweist und die angetriebene Kolbenpumpe sowie die Antriebseinrichtung aufgrund der reduzierten Reibung im Vergleich zu aus der Praxis bekannten Systemen durch eine höhere Lebensdauer gekennzeichnet sind.

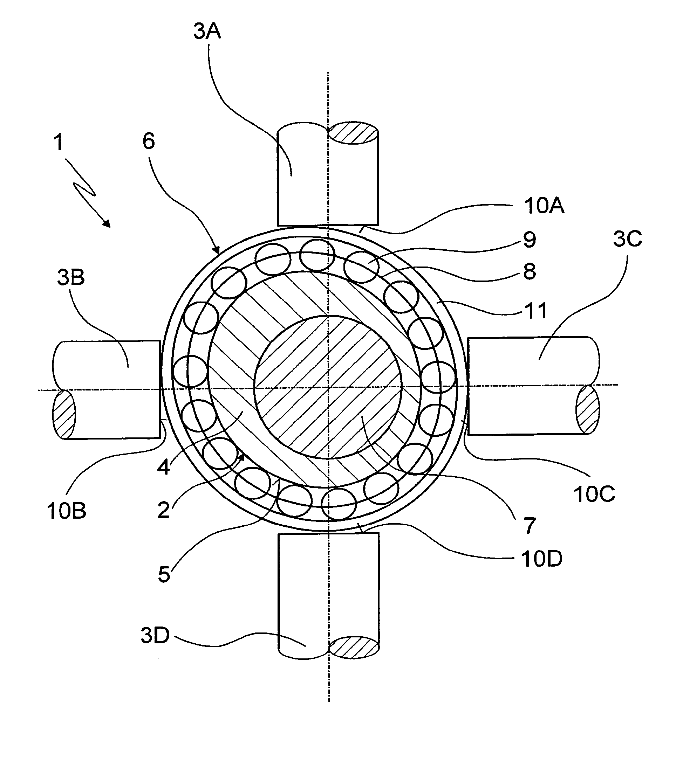

Weitere Vorteile und vorteilhafte Ausgestaltungen des Gegenstandes nach der Erfindung sind der Beschreibung, der Zeichnung und den Patentansprüchen entnehmbar.

### Zeichnung

In der Zeichnung ist ein Ausführungsbeispiel des Gegenstandes nach der Erfindung schematisch vereinfacht dargestellt, welches in der nachfolgenden Beschreibung näher erläutert wird.

Die einzige Figur der Zeichnung zeigt eine Querschnittansicht einer erfindungsgemäßen Antriebsvorrichtung.

### Beschreibung des Ausführungsbeispiels

In der Figur ist eine Antriebsvorrichtung 1 mit einer Exzentereinrichtung 2 in einer Querschnittsansicht dargestellt, mittels welcher vorliegend vier Kolbenelemente 3A bis 3D von nicht näher dargestellten Kolbenpumpen zwischen einem oberen Totpunkt und einem unteren Totpunkt translatorisch in einem Gehäuse der Kolbenpumpen verfahrbar sind.

Die Exzentereinrichtung 2 weist ein nockenförmiges Exzenterelement 4 auf, dessen äußere Mantelfläche 5 eine Steuerkurve für die Steuerung der translatorischen Bewegung der Kolbenelemente 3A bis 3D darstellt. Zwischen der Steuerkurve bzw. der Mantelfläche 5 des Exzenterelements 4 und den Kolbenelementen 3A bis 3D ist eine Wälzlagereinrichtung 6 vorgesehen. Die Wälzlagereinrichtung 6 ist mit einer derartigen Elastizität ausgeführt, dass die Kolbenelemente 3A bis 3D gemäß der vordefinierten Kontur der Steuerkurve des Exzenterelements 4 angesteuert werden, obwohl die Wälzlagereinrichtung 6 dazwischen angeordnet ist.

Das nockenförmige Exzenterelement 4 ist drehfest auf einer Motorwelle 7 eines nicht näher dargestellten und an sich bekannten Elektromotors angeordnet, so dass der rotatorische Antrieb des Elektromotors jeweils in die translatorischen Bewegungen der Kolbenelemente 3A bis 3D umgewandelt wird.

Die Wälzlagereinrichtung 6 umfasst vorliegend mehrere über einen elastischen Lagerkäfig 8 in Wirkverbindung stehende Wälzelemente 9, die in montiertem Zustand der Wälzlagereinrichtung 6 von einem zwischen den der Exzentereinrichtung 2 zugewandten Stirnflächen 10A bis 10D der Kolbenelemente 3A bis 3D und den Wälzelementen 9 angeordneten elastischen äußeren Lagerring 11 umgriffen sind.

Der äußere Lagerring 11 und der Lagerkäfig 8 sind mit einer derartigen Elastizität ausgeführt, dass die Kontur des äußeren Lagerrings 11 im Anlagebereich des Lagerrings 11 an den Stirnflächen 10A bis 10D der Kolbenelemente 3A bis 3D im Wesentlichen der Kontur des nockenförmigen Exzenterelements 4 entspricht.

Die vorliegend als Zylinderrollen ausgeführten Wälzkörper 9 werden mittels des Lagerkäfigs 8 zueinander beabstandet geführt. Der Lagerkäfig 8 ist vorliegend aus gehärtetem Federstahl hergestellt, so dass der Lagerkäfig 8 im Betrieb der Antriebsvorrichtung 1 in der gleichen Art und Weise wie der äußere Lagerring 11 der in der Figur im Querschnitt dargestellten äußeren Kontur des nockenförmigen Exzenterelements 4 folgen kann und die Kolbenelemente 3A bis 3D der Steuerkurve der Exzentereinrichtung 2 entsprechend angesteuert werden.

Selbstverständlich liegt es im Ermessen des Fachmannes, den Lagerkäfig 8 in Abhängigkeit des jeweils vorliegenden Anwendungsfalles aus einem geeigneten Kunststoff oder einem anderen geeigneten Material herzustellen, um die Wälzkörper 9 mittels des Lagerkäfigs 8 in der für die einwandfreie Funktionsweise der Wälzlagereinrichtung 6 erforderlichen Art und Weise zwischen dem Exzenterelement 4 und dem äußeren Lagerring 11 zueinander beabstandet führen zu können. Gleichzeitig muss das ausgewählte Material des Lagerkäfigs die für die Anpassung der Wälzlagereinrichtung 6 an die Kontur des Exzenterelements 4 gewünschte Elastizität des Lagerkäfigs gewährleisten.

Der äußere Lagerring 11 ist vorliegend aus Federstahl hergestellt und als ein geschlossener Außenring ausgeführt. Um über den elastischen äußeren Lagerring 11 eine möglichst große Kolbenkraft übertragen zu können, sind die Anzahl und der Durchmesser der Wälzkörper 9 derart ausgewählt, dass die Kraftübertragung von den Kolbenelementen 3A bis 3D über den elastischen äußeren Lagerring 11 auf das nockenförmige Exzenterelement 4 in allen Betriebssituationen über einen Wälzkörper oder vorzugsweise gleichzeitig über mehrere Wälzkörper 9 erfolgt.

Die vorbeschriebene Ausführungsform einer erfindungsgemäßen Antriebsvorrichtung ist grundsätzlich zum Antreiben von Hydraulikgeräten, insbesondere von ABS-, ESP- oder EHB-Systemen, geeignet. Dabei ist die Antriebsvorrichtung nach der Erfindung insbesondere für ABP-Anwendungen einsetzbar, bei welchen pro Hydraulikkreis aus Geräuschgründen zwei Kolbenpumpen bzw. eine Kolbenpumpe in Kombination mit einem Ausgleichskolben vorgesehen sind.

## Patentansprüche

1. Antriebsvorrichtung (1), insbesondere für eine mit wenigstens einem Kolbenelement (3A bis 3D) ausgebildete Kolbenpumpe eines Bremssystems eines Fahrzeugs, mittels der das Kolbenelement (3A bis 3D) über eine Exzentereinrichtung (2) zwischen einem oberen Totpunkt und einem unteren Totpunkt in Längsrichtung in einem Gehäuse verfahrbar ist, **dadurch gekennzeichnet,**
**dass** die Exzentereinrichtung (2) wenigstens ein nockenförmiges Exzenterelement (4) aufweist, dessen äußere Mantelfläche (5) eine Steuerkurve für die Steuerung der Bewegung des Kolbenelementes (3A bis 3D) darstellt,
**dass** zwischen der Steuerkurve des Exzenterelements (4) und dem Kolbenelement (3A, 3D) eine Wälzlagereinrichtung (6) vorgesehen ist, die mit einer derartigen Elastizität ausgeführt ist, dass das Kolbenelement (3A bis 3D) gemäß der vordefinierten Kontur der Steuerkurve des Exzenterelements (4) ansteuerbar ist,
wobei die Wälzlagereinrichtung (6) mehrere über einen elastischen Lagerkäfig (8) in Wirkverbindung stehende Wälzelemente (9) aufweist, die von einem, in montiertem Zustand der Wälzlagereinrichtung (6), zwischen der der Exzentereinrichtung (2) zugewandten Stirnfläche (10A bis 10D) des Kolbenelements (3A bis 3D) und den Wälzelementen (9) angeordneten elastischen äußeren Lagerring (11) umgriffen sind und
wobei eine Kraftübertragung von den Kolbenelementen (3A - 3D) über den elastischen äußeren Lagerring (11) auf die Wälzelemente (9) und von den Wälzelementen (9) auf die äußere Mantelfläche (5) des Exzenterelements (4) erfolgt.

2. Antriebsvorrichtung nach Anspruch 1, **dadurch gekennzeichnet, dass** der Lagerring (11) und der Lagerkäfig (8) mit einer derartigen Elastizität ausgeführt sind, dass die Kontur des äußeren Lagerrings (11) im Anlagebereich an der Stirnfläche (10A bis 10D) des Kolbenelements (3A bis 3D) im Wesentlichen der Kontur des Exzenterelements (4) angepasst ist.

3. Antriebsvorrichtung nach Anspruch 1 oder 2, **dadurch gekennzeichnet, dass** der Lagerkäfig (8) aus Kunststoff gebildet ist.

4. Antriebsvorrichtung nach Anspruch 1 oder 2, **dadurch gekennzeichnet, dass** der Lagerkäfig (8) aus gehärtetem Federstahl hergestellt ist.

5. Antriebsvorrichtung nach einem der Ansprüche 1 bis 4, **dadurch gekennzeichnet, dass** der äußere Lagerring (11) aus Federstahl hergestellt ist.

6. Antriebsvorrichtung nach einem der Ansprüche 1 bis 5, **dadurch gekennzeichnet, dass** eine Anzahl der Wälzelemente (9) und ein Außendurchmesser der Wälzelemente (9) derart in Abhängigkeit der Steuerkurve des Exzenterelements (4) vorgesehen ist, dass eine Biegespannung des äußeren Lagerrings (11) im Anlagebereich an dem Kolbenelement (3A bis 3D) minimal ist.

## Claims

1. Drive device (1), in particular for a piston pump, which is formed with at least one piston element (3A to 3D), of a vehicle braking system, by means of which the piston element (3A to 3D) is movable in the longitudinal direction in a housing between an upper dead centre and a lower dead centre via an eccentric device (2), **characterized**
**in that** the eccentric device (2) has at least one camshaped eccentric element (4), the outer surface area (5) of which constitutes a radial cam for controlling the movement of the piston element (3A to 3D),
**in that** a rolling bearing device (6) is provided between the radial cam of the eccentric element (4) and the piston element (3A to 3D), said rolling bearing device being formed with such elasticity that the piston element (3A to 3D) is drivable in accordance with the predefined contour of the radial cam of the eccentric element (4),
the rolling bearing device (6) having a plurality of rolling elements (9) which are operatively connected via an elastic bearing cage (8) enclosed by an elastic outer bearing ring (11) which, in the fitted state of the rolling bearing device (6), is arranged between the end face (10A to 10D) of the piston element (3A to 3D), which end face faces the eccentric device (2), and the rolling elements (9), and
force being transmitted from the piston elements (3A - 3D) via the elastic outer bearing ring (11) to the rolling elements (9) and from the rolling elements (9) to the outer surface area (5) of the eccentric element (4).

2. Drive device according to Claim 1, **characterized in that** the bearing ring (11) and the bearing cage (8) are formed with such an elasticity that the contour of the outer bearing ring (11) in the contact region with the end surface (10A to 10D) of the piston element (3A to 3D) is substantially matched to the contour of the eccentric element (4).

3. Drive device according to Claim 1 or 2, **characterized in that** the bearing cage (8) is formed from plastic.

4. Drive device according to Claim 1 or 2, **characterized in that** the bearing cage (8) is produced from hardened spring steel.

5. Drive device according to one of Claims 1 to 4, **characterized in that** the outer bearing ring (11) is produced from spring steel.

6. Drive device according to one of Claims 1 to 5, **characterized in that** a number of the rolling elements (9) and an outside diameter of the rolling elements (9) are provided depending on the radial cam of the eccentric element (4) in such a manner that a bending stress of the outer bearing ring (11) in the contact region with the piston element (3A to 3D) is minimal.

## Revendications

1. Dispositif d'entraînement (1), notamment pour une pompe à piston réalisée avec au moins un élément de piston (3A à 3D) d'un système de freinage d'un véhicule, au moyen duquel l'élément de piston (3A à 3D) peut être déplacé dans un boîtier par le biais d'un dispositif à excentrique (2) entre un point mort haut et un point mort bas dans la direction longitudinale, **caractérisé en ce que** le dispositif à excentrique (2) présente au moins un élément d'excentrique (4) en forme de came dont la surface d'enveloppe extérieure (5) constitue une courbe de commande pour la commande du mouvement de l'élément de piston (3A à 3D),
**en ce qu'**entre la courbe de commande de l'élément d'excentrique (4) et l'élément de piston (3A à 3D) est prévu un dispositif de palier à roulement (6) qui est réalisé avec une élasticité telle que l'élément de piston (3A à 3D) puisse être commandé en fonction du contour prédéfini de la courbe de commande de l'élément d'excentrique (4),
le dispositif de palier à roulement (6) présentant plusieurs éléments de roulement (9) en liaison fonctionnelle par le biais d'une cage de palier élastique (8), qui sont entourés en prise par une bague de palier (11) extérieure élastique disposée dans l'état monté du dispositif de palier à roulement (6) entre la surface frontale (10A à 10D) de l'élément de piston (3A à 3D) tournée vers le dispositif à excentrique (2) et les éléments de roulement (9), et
un transfert de force des éléments de piston (3A à 3D) ayant lieu par le biais de la bague de palier extérieure élastique (11) aux éléments de roulement (9) et des éléments de roulement (9) à la surface d'enveloppe extérieure (5) de l'élément d'excentrique (4).

2. Dispositif d'entraînement selon la revendication 1, **caractérisé en ce que** la bague de palier (11) et la cage de palier (8) sont réalisées avec une élasticité telle que le contour de la bague de palier extérieure (11) dans la région d'appui contre la surface frontale (10A à 10D) de l'élément de piston (3A à 3D) soit adapté essentiellement au contour de l'élément d'excentrique (4).

3. Dispositif d'entraînement selon la revendication 1 ou 2, **caractérisé en ce que** la cage de palier (8) est fabriquée en plastique.

4. Dispositif d'entraînement selon la revendication 1 ou 2, **caractérisé en ce que** la cage de palier (8) est fabriquée en acier à ressort trempé.

5. Dispositif d'entraînement selon l'une quelconque des revendications 1 à 4, **caractérisé en ce que** la bague de palier extérieure (11) est fabriquée en acier à ressort.

6. Dispositif d'entraînement selon l'une quelconque des revendications 1 à 5, **caractérisé en ce qu'**une pluralité d'éléments de roulement (9) et un diamètre extérieur des éléments de roulement (9) sont prévus en fonction de la courbe de commande de l'élément d'excentrique (4), de telle sorte qu'une contrainte de flexion de la bague de palier extérieure (11) dans la région d'appui contre l'élément de piston (3A à 3D) soit minimale.
